# EUROPÄISCHE PATENTANMELDUNG

(11) **EP 2 141 339 A1**
(43) Veröffentlichungstag der Anmeldung: **06.01.2010**
(21) Anmeldenummer: 09162797.6
(22) Anmeldetag: 16.06.2009
(51) Int. Cl.: F02C 7/32, F01D 15/10

(54) **Turbofantriebwerk mit mindestens einer Vorrichtung zum Antreiben mindestens eines Generators**

(30) Priorität: 03.07.2008 DE 102008031185
(71) Anmelder: Rolls-Royce Deutschland Ltd & Co KG, 15827 Blankenfelde-Mahlow (DE)
(72) Erfinder: Rensch, Detlef, 14974 Ludwigsfelde (DE)
(74) Vertreter: Wablat, Wolfgang

(57) **Zusammenfassung**

Turbofantriebwerk (1) mit mindestens einer Vorrichtung (30) zum Antreiben mindestens eines Generators (22, 35), das einen Vorverdichter (4), mindestens einen Verdichter (10) und mindestens zwei Triebwerkswellen (13, 15) umfasst, die rotierbar in einem Triebwerksgehäuse angeordnet sind, wobei mindestens ein erster Generator (22) über ein Hilfsgetriebe (21) mit einer der Triebwerkswellen (13) gekoppelt und mit mindestens einem Hilfsgerät (23) elektrisch verbunden ist.

Um in einem Turbofantriebwerk (1) so viel elektrische Energie zu erzeugen, dass die Hilfsgeräte (23), insbesondere die Kompressoren, auch im Niedrigenergiebereich stabil betrieben werden können, umfasst die Vorrichtung (30) mindestens eine Hilfsturbine (31), die zwischen dem Vorverdichter (4) und dem Verdichter (10) angeordnet ist.

## Beschreibung

Die Erfindung betrifft ein Turbofantriebwerk mit mindestens einer Vorrichtung zum Antreiben mindestens eines Generators und eine Verwendung des Turbofantriebwerks. Ferner betrifft die Erfindung ein Verfahren zum Antreiben mindestens eines Generators des Turbofantriebwerks.

Stand der Technik ist das heutige, mit einem Vorverdichter ausgestattete, zweiwellige Turbofantriebwerk. Diese Triebwerksklasse wird zunehmend benutzt, um Flugzeuge anzutreiben, die einen erhöhten Bedarf and elektrischer Leistung haben (more-elektrische Flugzeuge). Dieser erhöhte Bedarf kommt dadurch zustande, dass beispielsweise die Kabine nicht wie bei herkömmlichen Flugzeugen mit Luft aus dem Verdichter des Turbofantriebwerks versorgt wird, sondern mit Luft aus elektrisch betriebenen Kompressoren. Das führt zu größeren Generatoren und damit zu erhöhter Last für das Turbofantriebwerk. Diese Last wird beim zweiwelligen Turbofantriebwerk aus der Hochdruckwelle entnommen.

Der größte Nachteil dieser Entwicklung ist, dass der Versuch, auf Flugzeugebene ein verbessertes Produkt zu erzeugen, die Randbedingungen für das Turbofantriebwerk, insbesondere die Stabilität, unter bestimmten Betriebsbedingungen verschlechtert. Das zeigt sich in Problemen, den Hochdruckkompressor stabil zu betreiben.

Prinzipiell versucht man, das Turbofantriebwerk mit dem geringsten möglichen Aufwand zu betreiben und damit Brennstoff zu sparen, somit unter Bedingungen, in denen wenig Schub benötigt wird, mit geringstmöglicher Drehzahl zu fahren. Für einige Betriebsfälle werden nun weitere Randbedingungen aktiv, zum Beispiel das Kabinendrucklimit. Das ist der Mindestdruck, den das Turbofantriebwerk liefern muss, um die Versorgung der Passagierkabine zu gewährleisten.

Wenn man jedoch die verdichtete Luft nicht mehr aus dem Verdichter des Turbofantreibwerks, sondern über elektrisch betriebene Kompressoren im Flugzeug erzeugt, kann man das Turbofantriebwerk in bestimmten Betriebsfällen mit geringerer Drehzahl betreiben, da das Kabinendrucklimit nicht mehr relevant ist.

Damit kann das Turbofantriebwerk in den Niedrigenergiebedingungen wie Sinkflug oder Bodenleerlaufbetrieb so betrieben werden, dass es gerade noch läuft und damit weniger Brennstoff verbraucht. Für das Turbofantriebwerk heißt das aber, dass die Stabilität des Kompressors, bedingt durch die im Verhältnis zur Gesamtleistung hohe zusätzliche Last, schwieriger zu beherrschen ist, d.h. der Abstand zwischen Arbeitslinie und Pumpgrenze kleiner wird.

Das heutige zweiwellige Turbofantriebwerk besteht aus einer Hochdruck- und einer Niederdruckwelle. Die Hochdruckwelle treibt das Hilfsgetriebe an, an dem die verschiedenen Aggregate einschließlich der Generatoren angebracht sind, die die elektrische Leistung erzeugen. Es gibt also ein Hochdrucksystem, das die Hochdruckwelle und das Hilfsgetriebe umfasst. Aus diesen wird die gesamte Energie entnommen, die notwendig ist, um die Aggregate am Hilfsgetriebe anzutreiben, insbesondere die Generatoren, die ihrerseits u.a. die Kompressoren für die Kabinenluft mit elektrischer Energie versorgen. Das führt dazu, dass der Hochdruckwelle bei Niedrigenergiebedingungen vergleichsweise viel Energie in Relation zum Gesamtenergieinhalt entnommen wird. Das beeinflusst die Kompressorstabilität negativ, da die Last auf die Hochdruckwelle den Pumpgrenzenabstand negativ beeinflusst.

Die US 2005/0056021 A1 beschreibt einen mehrwelligen Turbogenerator, bei dem die Welle des Hochdruckstrangs einen Hauptgenerator und die Welle des Niederdruckstrangs einen Hilfsgenerator/-motor antreiben oder umgekehrt. Nachteilig ist hierbei der zusätzliche Energieverlust am Niederdruckstrang und in dem zugehörigen Getriebe.

Als Alternative wird offenbart, dass der Hauptgenerator oder der Hilfsgenerator angetrieben wird, indem das Abgas aus der Gasturbine eine Hilfsturbine antreibt, deren Welle mit dem Hilfsgenerator oder dem Hauptgenerator gekoppelt ist. Nachteilig ist hierbei, dass die Hilfsturbine den hohen Temperaturen des aus der Gasturbine austretenden Gasstroms ausgesetzt ist und die Hilfsturbine den Zulassungsbestimmungen unterliegt.

Außerdem ist ein System offenbart, in dem der Hilfgenerator/-motor von einer Welle der Gasturbine angetrieben wird. Der Hauptgenerator wird von einem zusätzlichen Verbrennungsmotor angetrieben. Nachteilig ist hier der zusätzliche Bau- und Gewichtsaufwand für den zusätzlichen Verbrennungsmotor.

In der WO 2006/060014 A1 ist ein Starter-Generator-System für einen Turbinenantrieb beschrieben, bei dem ein Rotor um einen Stator angeordnet und der Rotor fest mit dem Verdichterrotor verbunden ist. Bei der Verwendung als Motor (Starter) erhält das System elektrische Energie von einer Externen Stromquelle. Wenn der Turbinenantrieb Betriebsgeschwindigkeit erreicht hat, wird das System als Generator betrieben, der verschiedene Geräte mit Elektrizität versorgt. Der Nachteil dieses Systems besteht darin, dass das System ein hohes Gewicht aufweist.

Der Erfindung liegt daher die Aufgabe zu Grunde, in einem Turbofantriebwerk so viel elektrische Energie zu erzeugen, dass die Hilfsgeräte, insbesondere die Kompressoren, auch im Niedrigenergiebereich stabil betrieben werden können.

Diese Aufgabe wird erfindungsgemäß mit einem Turbofantriebwerk mit mindestens einer Vorrichtung zum Antreiben mindestens eines Generators nach Anspruch 1 gelöst. Weiterhin wird die Aufgabe mit einem Verfahren zum Antreiben mindestens eines Generators nach Anspruch 11 gelöst. Vorteilhafte Ausgestaltungen der Erfindung sind in den Unteransprüchen enthalten.

Erfindungsgemäß besteht die Lösung der Aufgabe in einem Turbofantriebwerk mit mindestens einer Vorrichtung zum Antreiben mindestens eines Generators, das einen Vorverdichter, mindestens einen Verdichter und mindestens zwei Triebwerkswellen umfasst, die rotierbar in einem Triebwerksgehäuse angeordnet sind. Mindestens ein erster Generator ist über ein Hilfsgetriebe mit einer der Triebwerkswellen gekoppelt und mit mindestens einem Hilfsgerät elektrisch verbunden. Die Vorrichtung umfasst mindestens eine Hilfsturbine, die zwischen dem Vorverdichter und dem Verdichter angeordnet ist.

Die Hilfsturbine dient dazu, Energie aus dem durch den Vorverdichter verdichteten Luftstrom zu entziehen und somit Energie von außen in das Hochdrucksystem einzuspeisen, um die Hochdruckwelle zu entlasten. Diese Energie wird unabhängig vom Kerntriebwerk aus dem Vorverdichterluftstrom entnommen und über einen Generator in elektrische Energie umgewandelt. Diese zusätzliche Energie kann dann in das Bordsystem eingespeist werden, mit dem Effekt, dass die Energie, die aus der Hochdruckwelle entnommen wird, entsprechend fällt und die Hochdruckwelle entlastet wird.

Es handelt sich hierbei also um eine einfache Lösung zum Entlasten der Hochdruckwelle. Es wird also Energie vom Niederdruck- in das Hochdrucksystem transferiert.

Außerdem wird der Platz zwischen dem Vorverdichter und dem Verdichter genutzt. An dieser Stelle ist die Betriebstemperatur relativ niedrig, so dass eine Erhitzung der Hilfsturbine vermieden wird.

Die Hilfsturbine ist mit mindestens einem von den Triebwerkswellen unabhängigen zweiten Generator koppelbar. Durch den unabhängigen zweiten Generator ist die Erzeugung von elektrischer Energie auch bei einem Ausfall des ersten Generators möglich. Ansonsten liefern beide Generatoren elektrische Energie, wodurch ein zeitweise erhöhter Energiebedarf gedeckt werden kann.

Die Hilfsturbine entzieht der verdichteten Luft Energie. Das führt zur Verringerung der Temperatur der Luft, was sich positiv auf die Hochdruckkompressoreintrittstemperatur auswirkt und somit auf die Materialwahl und das Gewicht des Hochdruckkompressors.

In einer alternativen Ausführungsform ist die Hilfsturbine über das Hilfsgetriebe mit dem mit einer der Triebwerkswellen gekoppelten ersten Generator koppelbar. Bei dieser Ausführungsform ist kein zusätzlicher Generator notwendig. Es kann außerdem kontinuierlich Energie in das Hochdrucksystem eingespeist werden. Es sind keine zusätzlichen baulichen Änderungen am Turbofantriebwerk notwendig.

In einer bevorzugten Ausführungsform ist die Hilfsturbine unabhängig von den Triebwerkswellen um mindestens eine der Triebwerkswellen rotierbar. Diese Anordnung ist besonders gut dazu geeignet, die Energie des aus dem Vorverdichter austretenden Luftstroms zu nutzen. Die Unabhängige Rotation der Hilfsturbine ermöglicht einen sicheren Betrieb der Generatoren unabhängig vom Kerntriebwerk, auch bei Niedrigenergiebedingungen.

Insbesondere ist die Hilfsturbine über mindestens eine Getriebeanordnung mit dem Hilfsgetriebe, das mit dem ersten Generator gekoppelt ist, und/oder mit dem zweiten Generator koppelbar. Dadurch ist die Hilfsturbine flexibel im Einsatz. Entweder treibt die Hilfsturbine den ersten Generator oder den zweiten Generator oder beide an.

Vorzugsweise ist zwischen der Getriebeanordnung und dem Hilfsgetriebe, das mit dem ersten Generator gekoppelt ist, eine erste Kupplung angeordnet. Außerdem kann zwischen der Getriebeanordnung und dem zweiten Generator eine zweite Kupplung angeordnet sein oder zwischen dem zweiten Generator und dem Hilfsgerät eine trennbare elektrische Verbindung bestehen. Die Kupplungen bzw. die trennbare elektrische Verbindung ermöglichen ein Abkoppeln der Hilfsturbine, wenn der Bedarf an elektrischer Energie sinkt, z.B. bei hoher Drehzahl der Hochdruckwelle. Die Kupplung kann z.B. ein Freilauf oder eine Fluidkupplung sein.

Die Hilfsturbine kann auf einer der Triebwerkswellen gelagert sein. Diese Lagerung spart Platz und Gewicht.

Alternativ kann die Hilfsturbine im Triebwerksgehäuse gelagert sein. Diese Ausführungsform ermöglicht eine einfache Montage.

Vorzugsweise wird das Turbofantriebwerk in einem more-elektrischen Flugzeug mit elektrisch betriebenen Kompressoren oder anderweitig erhöhtem Bedarf an elektrischer Energie verwendet. Bei diesem Flugzeugtyp ist der Bedarf an elektrischer Energie wegen der generatorbetriebenen Kompressoren besonders hoch. Dieser Energiebedarf kann mit dem erfindungsgemäßen Turbofantriebwerk zuverlässig gedeckt werden.

Weiterhin besteht die Lösung der Aufgabe in einem Verfahren zum Antreiben des mindestens einen Generators des Turbofantriebwerks. Die Hilfsturbine wandelt Strömungsenergie aus dem Vorverdichterluftstrom, der aus dem Vorverdichter austritt, in Rotationsenergie um, und die Rotationsenergie treibt bei Bedarf den mindestens einen Generator an, der das Hilfsgerät mit elektrischer Energie versorgt.

Dieses Verfahren nutzt also die vom Vorverdichter erzeugte Strömungsenergie, um den zweiten Generator und/oder über das Hilfsgetriebe den ersten Generator anzutreiben und damit die Hilfsgeräte mit elektrischer Energie zu versorgen. Diese Energie wird somit am Kerntriebwerk eingespart, d.h. die Hochdruckwelle wird entlastet und der Brennstoffverbrauch des Turbofantriebwerks wird gesenkt.

Insbesondere überträgt die Hilfsturbine die Rotationsenergie auf die Getriebeanordnung und treibt dadurch zusätzlich zu der Hochdruckwelle, die den ersten Generator antreibt, den zweiten Generator und/oder über das Hilfsgetriebe den ersten Generator an, wenn die benötigte elektrische Energie größer ist als die durch eine Rotation der Triebwerkswelle am ersten Generator erzeugte elektrische Energie.

Dieser Betriebszustand tritt bei Niedrigenergiebedingungen (z.B. Sinkflug, Bodenleerlaufbetrieb) auf. Durch das Verfahren wird gewährleistet, dass bei geringer Energieerzeugung durch die Hochdruckwelle in diesem Betriebszustand die Hilfsturbine mindestens einen Generator antreibt und dadurch den Energieverlust ausgleicht.

Die Getriebeanordnung der Hilfsturbine wird mittels der ersten Kupplung an das Hilfsgetriebe mit dem ersten Generator gekoppelt. Außerdem kann die Getriebeanordnung der Hilfsturbine mittels der zweiten Kupplung an den zweiten Generator gekoppelt oder der zweite Generator elektrisch mit dem Hilfsgerät verbunden werden. Dadurch kann die Energie von der Hilfsturbine bei Niedrigenergiebedingungen auf den ersten und/oder den zweiten Generator übertragen werden.

Vorzugsweise dreht sich die Hilfsturbine in einem für den Generatorbetrieb geeigneten Drehzahlbereichgegenüber der Triebwerkswelle, die mit dem ersten Generator gekoppelt ist. Der Drehzahlbereich definiert sich je nach Anforderung an den Generator. Die Hilfsturbine ist in diesem Fall so konstruiert, dass sie innerhalb des üblichen Drehzahlbereichs des ersten Generators gegenüber der Hochdruckwelle läuft.

Außerdem rotiert die Hilfsturbine frei um die mindestens eine Triebwerkswelle, wenn die durch eine Rotation der Triebwerkswelle am ersten Generator erzeugte elektrische Energie ausreichend ist. Dieses Verfahren betrifft die Betriebszustände mit hoher Drehzahl der Hochdruckwelle. Dabei reicht die von der Hochdruckwelle am ersten Generator erzeugte elektrische Energie aus, um alle Hilfsgeräte, insbesondere die Kompressoren, mit Strom zu versorgen.

Die Getriebeanordnung der Hilfsturbine kann mittels der ersten Kupplung vom Hilfsgetriebe mit dem ersten Generator abgekoppelt werden. Außerdem kann die Getriebeanordnung der Hilfsturbine mittels der zweiten Kupplung vom zweiten Generator abgekoppelt werden oder der zweite Generator elektrisch von dem Hilfsgerät getrennt werden. Bei den Betriebsbedingungen mit hoher Energie im Hochdrucksystem kann dadurch die Erzeugung überschüssiger elektrischer Energie vermieden werden.

Im Folgenden werden zwei Ausführungsbeispiele der Erfindung anhand von zwei Figuren näher erläutert. Es zeigen:
- Fig. 1: eine schematische Darstellung einer ersten Ausführungsform der Erfindung mit einem einzigen Generator und
- Fig. 2: eine schematische Darstellung einer zweiten Ausführungsform mit einem ersten und einem zweiten Generator.

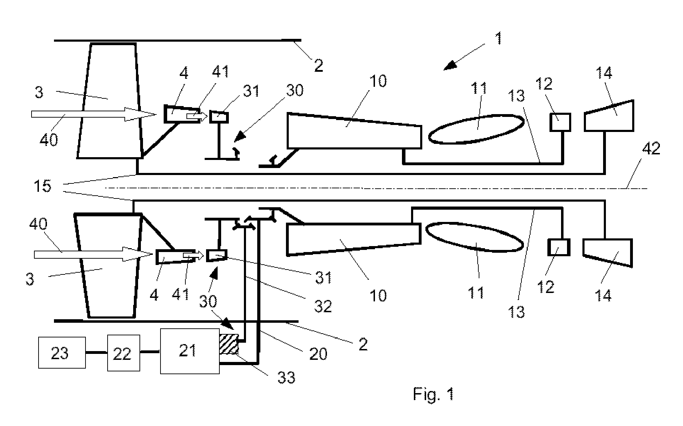

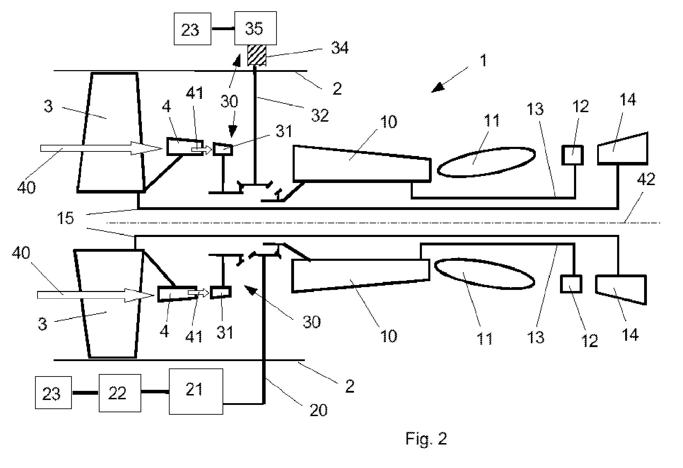

Die Fig. 1 und 2 zeigen schematisch jeweils ein Turbofantriebwerk 1 mit einem Fangehäuse 2, einem Fan 3, und einem Vorverdichter 4. Weiterhin umfasst das Turbofantriebwerk 1 einen Verdichter 10, eine Brennkammer 11, eine Hochdruckturbine 12, eine Hochdruckwelle 13 (Triebwerkswelle), eine Niederdruckturbine 14 und eine Niederdruckwelle 15 (Triebwerkswelle). Außerdem umfasst das Turbofantriebwerk 1 eine Radialwelle 20, ein Hilfsgetriebe 21, einen ersten Generator 22, Hilfsgeräte 23 und eine Vorrichtung 30.

In dem Turbofantriebwerk 1 sind das Fangehäuse 2, der Fan 3, der Vorverdichter 4, der Verdichter 10, die Brennkammer 11, die Hochdruckturbine 12 und die Niederdruckturbine 14 in Strömungsrichtung hintereinander und rotationssymmetrisch um die Hochdruckwelle 13 und die Niederdruckwelle 13 und damit um die Mittellinie 42 angeordnet. Das Fangehäuse 2 umgibt den Fan 3 und den Vorverdichter 4.

Das Radialwelle 20 verbindet die Hochdruckwelle 13 mit dem Hilfsgetriebe 21. Das Hilfsgetriebe 21 ist über den ersten Generator 22 mit den Hilfsgeräten 23 gekoppelt.

In Fig. 1 ist die erste Ausführungsform des Turbostrahltriebwerks 1 mit der Vorrichtung 30 schematisch dargestellt. Die Vorrichtung 30 umfasst eine Hilfsturbine 31, eine Getriebeanordnung 32 und eine erste Kupplung 33.

Die Hilfsturbine 31 ist rotationssymmetrisch zur Mittellinie 42 aufgebaut und zwischen dem Vorverdichter 4 und dem Verdichter 10 angeordnet. Die Hilfsturbine 31 ist auf der Niederdruckwelle 15 gelagert und über die Getriebeanordnung 32 und die erste Kupplung 33 mit dem ersten Generator 21 gekoppelt.

Im Betrieb erzeugt der Fan 3 einen Fanluftstrom 40, der in den Vorverdichter 4 eintritt. Der Vorverdichter 4 wiederum erzeugt einen Vorverdichterluftstrom 41, der in die Hilfsturbine 31 eintritt und diese antreibt. Die Hilfsturbine 31 erzeugt dabei Rotationsenergie, die auf die Getriebeanordnung 32 übertragen wird.

Die Hilfsturbine 31 treibt über die Getriebeanordnung 32 und eine nicht dargestellte Welle das Hilfsgetriebe 21 an. Die erste Kupplung 33 zwischen der Getriebeanordnung 32 und dem Hilfsgetriebe 21 stellt sicher, dass die Leistung immer nur in das Hilfsgetriebe 21 hinein übertragen wird. Die erste Kupplung 33 kann entweder mechanisch oder mit Fluiden arbeiten.

Über einen nicht dargestellten Zahnradstrang im Hilfsgetriebe 21 werden dann der erste Generator 22 und eventuell vorhandene nicht dargestellte weitere Generatoren angetrieben, die dann elektrische Energie erzeugen und die Hilfsgeräte 23 mit Strom versorgen.

Die Antriebsleistung für das Hilfsgetriebe 21 wird also nicht mehr zu hundert Prozent aus der Hochdruckwelle 13 , sondern über die durch den Fan 3 und den Vorverdichter 4 verdichtete Luft auch aus der Niederdruckwelle 15 entnommen. Damit wird die Hochdruckwelle 13 entlastet und infolge dessen die Betriebsstabilität entsprechend verbessert.

In Fig. 2 ist die zweite Ausführungsform des Turbostrahltriebwerks 1 mit der Vorrichtung 30 schematisch dargestellt. Die Vorrichtung 30 umfasst eine Hilfsturbine 31, eine Getriebeanordnung 32, eine zweite Kupplung 34, einen zweiten Generator 35 und die Hilfsgeräte 23.

Die Hilfsturbine 31 ist rotationssymmetrisch zur Mittellinie 42 aufgebaut und zwischen dem Vorverdichter 4 und dem Verdichter 10 angeordnet. Die Hilfsturbine 31 ist auf der Niederdruckwelle 15 gelagert und über die Getriebeanordnung 32 und die zweite Kupplung 34 mit dem zweiten Generator 35 gekoppelt. An den zweiten Generator 35 sind dieselben Hilfsgeräte 23 angeschlossen, die auch an den ersten Generator 22 angeschlossen sind.

Im Betrieb erzeugt der Fan 3 einen Fanluftstrom 40, der in den Vorverdichter 4 eintritt. Der Vorverdichter 4 wiederum erzeugt einen Vorverdichterluftstrom 41, der in die Hilfsturbine 31 eintritt und diese antreibt. Die Hilfsturbine 31 erzeugt dabei Rotationsenergie, die auf die Getriebeanordnung 32 übertragen wird.

Die Hilfsturbine 31 treibt über die Getriebeanordnung 32 und eine nicht dargestellte Welle den zweiten Generator 35 an, der eine geeignete elektrische Energie erzeugt und damit die Hilfsgeräte 23 mit Strom versorgt.

Der zweite Generator 35 hat nur einen bestimmten Betriebsbereich, was seine Eingangsdrehzahl angeht. Daher muss der zweite Generator 35 so betrieben werden, dass er in den kritischen Fällen, d.h. bei Niedrigenergiebedingungen, elektrische Energie liefert, in den unkritischen Fällen jedoch elektrisch entkoppelt ist, d.h. in Betriebsbereichen mit hoher Last.

Alternativ kann die Getriebeanordnung 32 mittels der zweiten Kupplung 34 vom zweiten Generator 35 abgekoppelt werden. Die zweite Kupplung kann z.B. ein mechanischer Freilauf oder eine Fluidkupplung sein.

### Bezugszeichenliste

- 1: Turbofantriebwerk
- 2: Fangehäuse
- 3: Fan
- 4: Vorverdichter

- 10: Verdichter
- 11: Brennkammer
- 12: Hochdruckturbine
- 13: Hochdruckwelle
- 14: Niederdruckturbine
- 15: Niederdruckwelle

- 20: Radialwelle
- 21: Hilfsgetriebe
- 22: Erster Generator
- 23: Hilfsgeräte

- 30: Vorrichtung
- 31: Hilfsturbine
- 32: Getriebeanordnung
- 33: Erste Kupplung
- 34: Zweite Kupplung
- 35: Zweiter Generator

- 40: Fanluftstrom
- 41: Vorverdichterluftstrom
- 42: Mittellinie

## Patentansprüche

1. Turbofantriebwerk (1) mit mindestens einer Vorrichtung (30) zum Antreiben mindestens eines Generators (22, 35), das einen Vorverdichter (4), mindestens einen Verdichter (10) und mindestens zwei Triebwerkswellen (13, 15) umfasst, die rotierbar in einem Triebwerksgehäuse angeordnet sind, wobei mindestens ein erster Generator (22) über ein Hilfsgetriebe (21) mit einer der Triebwerkswellen (13) gekoppelt und mit mindestens einem Hilfsgerät (23) elektrisch verbunden ist, **dadurch gekennzeichnet, dass** die Vorrichtung (30) mindestens eine Hilfsturbine (31) umfasst, die zwischen dem Vorverdichter (4) und dem Verdichter (10) angeordnet ist.

2. Turbofantriebwerk (1) nach Anspruch 1, **dadurch gekennzeichnet, dass** die Hilfsturbine (31) mit mindestens einem von den Triebwerkswellen (13, 15) unabhängigen zweiten Generator (35) koppelbar ist.

3. Turbofantriebwerk (1) nach Anspruch 1 oder 2, **dadurch gekennzeichnet, dass** die Hilfsturbine (31) über das Hilfsgetriebe (21) mit dem mit einer der Triebwerkswellen (13, 15) gekoppelten ersten Generator (22) koppelbar ist.

4. Turbofantriebwerk (1) nach einem der Ansprüche 1 bis 3, **dadurch gekennzeichnet, dass** die Hilfsturbine (31) unabhängig von den Triebwerkswellen (13, 15) um mindestens eine der Triebwerkswellen (15) rotierbar ist.

5. Turbofantriebwerk (1) nach einem der Ansprüche 2 bis 4, **dadurch gekennzeichnet, dass** die Hilfsturbine (31) über mindestens eine Getriebeanordnung (32) mit dem Hilfsgetriebe (21), das mit dem ersten Generator (22) gekoppelt ist, und/oder mit dem zweiten Generator (35) koppelbar ist.

6. Turbofantriebwerk (1) nach Anspruch 5, **dadurch gekennzeichnet, dass** zwischen der Getriebeanordnung (32) und dem Hilfsgetriebe (21), das mit dem ersten Generator (22) gekoppelt ist, eine erste Kupplung (33) angeordnet ist.

7. Turbofantriebwerk (1) nach Anspruch 5 oder 6, **dadurch gekennzeichnet, dass** zwischen der Getriebeanordnung (32) und dem zweiten Generator (35) eine zweite Kupplung (34) angeordnet ist oder zwischen dem zweiten Generator (35) und dem Hilfsgerät (23) eine trennbare elektrische Verbindung besteht.

8. Turbofantriebwerk (1) nach einem der Ansprüche 1 bis 7, **dadurch gekennzeichnet, dass** die Hilfsturbine (31) auf einer der Triebwerkswellen (15) gelagert ist.

9. Turbofantriebwerk (1) nach einem der Ansprüche 1 bis 7, **dadurch gekennzeichnet, dass** die Hilfsturbine (31) im Triebwerksgehäuse gelagert ist.

10. Verwendung des Turbofantriebwerks (1) nach einem der Ansprüche 1 bis 9 in einem more-elektrischen Flugzeug mit elektrisch betriebenen Kompressoren oder anderweitig erhöhtem Bedarf an elektrischer Energie.

11. Verfahren zum Antreiben des mindestens eines Generators (22, 35) des Turbofantriebwerks (1) nach einem der Ansprüche 1 bis 9, **dadurch gekennzeichnet, dass** die Hilfsturbine (31) Strömungsenergie aus dem Vorverdichterluftstrom (41), der aus dem Vorverdichter (4) austritt, in Rotationsenergie umwandelt, und die Rotationsenergie bei Bedarf den mindestens einen Generator (22, 35) antreibt, der das Hilfsgerät (23) mit elektrischer Energie versorgt.

12. Verfahren nach Anspruch 11, **dadurch gekennzeichnet, dass** die Hilfsturbine (31) die Rotationsenergie auf die Getriebeanordnung (32) überträgt und **dadurch** zusätzlich zu der Hochdruckwelle (13), die den ersten Generator (22) antreibt, den zweiten Generator (35) und/oder über das Hilfsgetriebe (21) den ersten Generator (22) antreibt, wenn die benötigte elektrische Energie größer ist als die durch eine Rotation der Triebwerkswelle (13) am ersten Generator (22) erzeugte elektrische Energie.

13. Verfahren nach Anspruch 11 oder 12, **dadurch gekennzeichnet, dass** die Getriebeanordnung (32) der Hilfsturbine (31) mittels der ersten Kupplung (33) an das Hilfsgetriebe (21) mit dem ersten Generator (22) gekoppelt wird.

14. Verfahren nach einem der Ansprüche 11 bis 13, **dadurch gekennzeichnet, dass** die Getriebeanordnung (32) der Hilfsturbine (31) mittels der zweiten Kupplung (34) an den zweiten Generator (35) gekoppelt wird oder der zweite Generator (35) elektrisch mit dem Hilfsgerät (23) verbunden wird.

15. Verfahren nach einem der Ansprüche 11 bis 14, **dadurch gekennzeichnet, dass** sich die Hilfsturbine (31) in einem für den Generatorbetrieb geeigneten Drehzahlbereich gegenüber der Triebwerkswelle (13), die mit dem ersten Generator (22) gekoppelt ist, dreht.

16. Verfahren nach Anspruch 11, **dadurch gekennzeichnet, dass** die Hilfsturbine (31) frei um die mindestens eine Triebwerkswelle (13) rotiert, wenn die durch eine Rotation der Triebwerkswelle (13) am ersten Generator (22) erzeugte elektrische Energie ausreichend ist.

17. Verfahren nach Anspruch 16, **dadurch gekennzeichnet, dass** die Getriebeanordnung (32) der Hilfsturbine (31) mittels der ersten Kupplung (33) vom Hilfsgetriebe (21) mit dem ersten Generator (22) abgekoppelt wird.

18. Verfahren nach Anspruch 16 oder 17, **dadurch gekennzeichnet, dass** die Getriebeanordnung (32) der Hilfsturbine (31) mittels der zweiten Kupplung (34) vom zweiten Generator (35) abgekoppelt wird oder der zweite Generator (35) elektrisch von dem Hilfsgerät (23) getrennt wird.
